# EUROPEAN PATENT SPECIFICATION

(11) **EP 3 280 765 B1**
(45) Date of publication and mention of the grant of the patent: **28.10.2020**
(21) Application number: 16720225.8
(22) Date of filing: 07.04.2016
(51) Int. Cl.: C08K 3/08, C08K 5/00, H01B 1/22

(54) **CONDUCTIVE COMPOSITE FORMULATION AND ARTICLE AT LEAST PARTIALLY FORMED FROM A CONDUCTIVE COMPOSITE FORMULATION**
LEITFÄHIGE VERBUNDSTOFFFORMULIERUNG UND ZUMINDEST TEILWEISE AUS EINER LEITFÄHIGEN VERBUNDSTOFFFORMULIERUNG GEFORMTER ARTIKEL
FORMULATION COMPOSITE CONDUCTRICE ET ARTICLE AU MOINS PARTIELLEMENT FORMÉ D'UNE FORMULATION COMPOSITE CONDUCTRICE

(30) Priority: 10.04.2015 US 201514684270
(43) Date of publication of application: 14.02.2018
(73) Proprietor: TE Connectivity Corporation, Berwyn, PA 19312 (US)
(72) Inventor: WANG, Jialing, Mountain View, CA 94043 (US); GAO, Ting, Palo Alto, CA 94306 (US); TOTH, James, Sam Carlos, CA 94070 (US)
(74) Representative: Johnstone, Douglas Ian
(86) International application number: PCT/US2016/026505
(87) International publication number: WO 2016/164626

(56) References cited:
- WO-A1-95/08829
- JP-A- 2001 084 833
- DATABASE CA [Online] CHEMICAL ABSTRACTS SERVICE, COLUMBUS, OHIO, US; SHIBATA, MASAYUKI ET AL: "Conductive polymer compositions", XP002758875, retrieved from STN Database accession no. 1986:20272 -& DATABASE WPI Week 198536 Thomson Scientific, London, GB; AN 1985-221408 XP002758876, -& JP S60 144367 A (DAINICHISEIKA COLOR & CHEM MFG) 30 July 1985 (1985-07-30)
- DATABASE CA [Online] CHEMICAL ABSTRACTS SERVICE, COLUMBUS, OHIO, US; SHIBATA, MASAYUKI ET AL: "Conductive polymer compositions", XP002758877, retrieved from STN Database accession no. 1987:460133 -& DATABASE WPI Week 198710 Thomson Scientific, London, GB; AN 1987-068092 XP002758878, -& JP S62 20540 A (DAINICHISEIKA COLOR & CHEM MFG) 29 January 1987 (1987-01-29)
- DATABASE WPI Week 199034 Thomson Scientific, London, GB; AN 1990-256488 XP002758891, -& JP H02 178356 A (KAWASAKI TECHNORES) 11 July 1990 (1990-07-11)

## Description

### FIELD OF THE INVENTION

The present invention is directed to conductive composite formulations and articles at least partially formed from conductive composite formulations. More particularly, the present invention is directed to such formulations and articles having a colorant.

### BACKGROUND OF THE INVENTION

In general, polymeric conductive composites can be composed of a polymer matrix, one or more conductive fillers, and functional additives. For example, JP2001084833 discloses composites comprising metallic conductive particles such as silver and colorants such as copper and copper oxides. JPS60144367 discloses composites comprising conductive carbon fibers and dyes as colorants. JPS6220540 discloses conductive brass fibers and copper dyes. JPH02178356 discloses composites comprising brass fibers and dyes. WO95/08829 discloses composites comprising conductive bronze particles with pigments and dyes. Copper powders are capable of being used in such composites to achieve high conductivity instead of silver for a variety of reasons.

Use of the copper confers a brown color to such composites and products produced from such composites. The brown color suffers from the drawback of being difficult to shade and impossible for achieving certain colors. In addition, brown colors can be aesthetically displeasing, depending upon the intended application.

Pigments from inorganic materials are known. However, use of additional inorganic materials can cause diminished mechanical and/or electrical properties when incorporated into a polymeric conductive composite. In addition, such pigments are not able to overcome the dominant coloring effect imparted by brown shades.

A conductive composite formulation and an article at least partially formed from a conductive composite formulation that show one or more improvements in comparison to the prior art would be desirable in the art.

### BRIEF DESCRIPTION OF THE INVENTION

In an embodiment, a conductive composite formulation includes a polymer matrix, conductive particles being blended within the polymer matrix, and a colorant blended with the polymer matrix. The conductive composite formulation has a compound resistivity of between 0.0005 ohm·cm and 0.2 ohm·cm. The conductive particles having copper-containing material and tin-containing material.

In another embodiment, a conductive composite formulation includes a polymer matrix, a colorant blended with the polymer matrix, white pigment blended with the polymer matrix, and copper-containing material and tin-containing material blended with the polymer matrix. The colorant absorbs light outside of a wavelength selected from the group consisting of between 400 nm and 450 nm, between 450 nm and 490 nm, between 490 nm and 560 nm, between 560 nm and 590 nm, between 590 nm and 635 nm, and between 620 nm and 740 nm. The white pigment blended with the polymer matrix is at a concentration, by volume, of between 0.5% and 5%. The copper-containing material and the tin-containing material blended with the polymer matrix are at a concentration, by volume, of between 20% and 40%.

In another embodiment, an article at least partially formed from a conductive composite formulation includes a polymer matrix, conductive particles being blended within the polymer matrix, and a colorant blended with the polymer matrix. The conductive composite formulation has a compound resistivity of between 0.0005 ohm·cm and 0.2 ohm-cm. The conductive particles having copper-containing material and tin-containing material.

Other features and advantages of the present invention will be apparent from the following more detailed description, which illustrates, by way of example, the principles of the invention.

### DETAILED DESCRIPTION OF THE INVENTION

Provided are a conductive composite formulation and an article at least partially formed from a conductive composite formulation. Embodiments of the present disclosure, for example, in comparison to concepts failing to include one or more of the features disclosed herein, permit coloration of products and composite formulations not previously achievable, permit resistivity and/or contact resistance to be maintained or decreased, permit other suitable advantages and differences, or permit a combination thereof.

According to the disclosure, a conductive composite according to claim 1 includes a polymer matrix, conductive particles having copper-containing material and tin-containing material being blended within the polymer matrix, and a colorant blended with the polymer matrix. The conductive composite formulation has a compound resitivity of between 0.0005 ohm·cm and 0.2 ohm·cm or between 0.0005 ohm·cm and 0.008 ohm·cm. As used herein, the term "compound resistivity" refers to measurable values determined prior to the formation of a component from the formulation. Additionally or alternatively, the conductive composite formulation has a contact resistance, for example, of between 0.04 ohms and 0.09 ohms, such as, between 0.06 ohms and 0.08 ohms, between 0.04 ohms and 0.06 ohms, or any suitable combination, sub-combination, range, or sub-range therein, in comparison to a similar conductive composite formulation without the colorant having a contact resistance of between 0.07 ohms and 0.13 ohms.

The polymer matrix is any suitable polymeric materials capable of having color adjusted or controlled by blending of the colorant. Suitable polymeric materials include, but are not limited to, non-conductive matrices, such as, polyvinylidene fluoride, hexafluoropropylene /polyvinylidene fluoride copolymers, tetrafluoroethylene/hexafluoropropylene/polyvinylidene fluoride terpolymers, fluorinated ethylene propylene, ethylene tetrafluoroethylene, or a combination thereof. Other suitable non-conductive matrices include, but are not limited to, polyamide, polyolefin, polytetrafluoroethylene, neoprene, liquid crystalline polymers, polybutylene terephthalate or a combination thereof. In one embodiment, the polymer matrix has a crystallinity within a specific range, for example, between 15% and 65%, between 15% and 35%, between 15% and 20%, between 18% and 19%, between 30% and 35%, between 32% and 34%, or any suitable combination, sub-combination, range, or sub-range therein.

The conductive composite formulation is processable, thereby being capable of at least partially being formed into or being capable of at least partially defining an article, such as, a heat-recoverable or non-heat-recoverable product. Suitable heat-recoverable products include, but are not limited to, a composite shield, a tube, a sleeve, an end cap, a tape, electromagnetic interference shielding, housings, another suitable heat-recovered product, or a combination thereof. As used herein, the term "shield" is intended to reference an independent structure or portion of an independent structure. It is not intended to encompass coatings or such layers positioned on another structure. Suitable non-heat-recoverable products include, but are not limited to, an antenna, electromagnetic interference shielding, housings, or a combination thereof. Such products are capable of being produced by, for example, injection molding, extrusion, coextrusion, tandem-extrusion, additive processes, dye casting, or a combination thereof. In general, suitable products (which are capable of having compound resistivity values beyond that which is specifically disclosed herein) include, but are not limited to, composite shields, tubes, sleeves, end caps, tapes, electromagnetic interference shieldings, housings, antennae, hoses, curtains, mats, gaskets, tool handlers, packaging trays, photomask shipping and storage boxes, shoes and apparels (for example, for clean room operations), electronic assembly packaging, electronic processing parts, electronic components, tape and reel for integrated circuit packaging, or a combination thereof.

Depending upon the desired application, the conductive composite formulation is adjusted for specific coloration or other aesthetic purposes by selection of the colorant and the concentration of the colorant. For example, according to embodiments of the disclosure, the colorant absorbs light outside of a wavelength of between 620 nm and 740 nm (thereby being red), absorbs light outside of a wavelength of between 560 nm and 590 nm (thereby being yellow), absorbs light outside of a wavelength of between 490 nm and 560 nm (thereby being green), absorbs light outside of a wavelength of between 450 nm and 490 nm (thereby being blue), absorbs light outside of a wavelength of 590 nm and 635 nm (thereby being orange), absorbs light outside of a wavelength of 400 nm and 450 nm (thereby being purple), absorbs light outside of any other suitable selected wavelength range, or a combination thereof.

Suitable pigments for the colorant being red include, but are not limited to, cadmium selenide, anhydrous iron oxide, lead tetroxide, mercuric sulfide, DPP red, thioindigoid red, naphthol red, other suitable materials capable of being blended within the polymer matrix, or a combination thereof.

Suitable pigments for the colorant being yellow include, but are not limited to, arsenic sulfide, cadmium sulfide, plumbous chromate, potassium cobaltnitride, monohydrated ferric oxide, stannic sulfide, diazo yellow, diarylide yellow, isoindolinone yellow, other suitable materials capable of being blended within the polymer matrix, or a combination thereof.

Suitable pigments for the colorant being green include, but are not limited to, chromic oxide, hydrated chromic oxide, cupric acetoarsenite, cupric arsenite, phthalocyanine green, other suitable materials capable of being blended within the polymer matrix, or a combination thereof.

Suitable pigments for the colorant being blue include, but are not limited to, sulfur-containing sodio-silicate, cobalt (II) stannate, calcium copper silicate, barium copper silicate, ferric hexacyanoferrate, phthalocyanine blue, other suitable materials capable of being blended within the polymer matrix, or a combination thereof.

Suitable pigments for the colorant being orange include, but are not limited to, cadmium sulfoselenide, a mixture of lead (II) chromate and lead (II) oxide, azo orange, DPP orange, other suitable materials capable of being blended within the polymer matrix, or a combination thereof.

Suitable pigments for the colorant being purple include, but are not limited to, silicate of sodium and aluminum containing sulfur, barium copper silicate, cobaltous orthophosphate, manganic ammonium pyrophosphate, quinacridone violet, perylene violet, other suitable materials capable of being blended within the polymer matrix, or a combination thereof.

Additionally or alternatively, in one embodiment, the conductive composite formulation is adjusted for specific coloration or other aesthetic purposes by including white pigment, such as, zinc oxide, titanium dioxide, bismuth nitrate oxide, basic plumbous carbonate, barium sulfate, stibous oxide, other suitable materials capable of being blended with the polymer matrix, or a combination thereof.

In one embodiment, the conductive composite formulation is adjusted for specific coloration or other aesthetic purposes by including black pigment, such as, carbon black, aniline black, other suitable materials capable of being blended with the polymer matrix, or a combination thereof.

The conductive composite includes particles containing copper-containing material and tin-containing material, such as alloys, elemental metals, metalloids, and/or impure alloys. The conductive particles are blended within the polymer matrix. In general, suitable conductive particles are or include copper-containing material particles, tin-containing material particles, nickel particles, aluminum particles, carbon particles, carbon black, carbon nanotubes, graphene, silver-coated particles, nickel-coated particles, other suitable conductive particles compatible with the polymer matrix, or a combination thereof. Suitable morphologies for the conductive particles include, but are not limited to, dendrites, flakes, and spheres. In one embodiment, the conductive particles are or include copper-containing material flakes and dendrites, for example, at a relative volume concentration of between 40% to 70% (for example, 60%) higher aspect ratio particles, such as copper-containing material dendrites having average sizes of between 20 micrometers and 30 micrometers, and 30% and 50% (for example, 40%) lower aspect ratio particles, such as tin-containing material spheres having average sizes of between 5 micrometers and 20 micrometers.

In one embodiment, the concentration of the conductive particles within the polymer matrix is above the percolation threshold, which is lower for semicrystalline polymers than amorphous polymers due to the semicrystalline polymers including more efficient filler network formation around polymer crystallites. Additionally or alternatively, in one embodiment, the concentration of the conductive particles within the polymer matrix is below a recrystallization-limiting threshold. As used herein, the phrase "recrystallization-limiting threshold" refers to a concentration of the conductive particles within the polymer matrix at which the cooling after melt-mixing would not permit a substantially equivalent reformation of crystals in the polymer matrix.

The colorant(s)/pigments is/are at any suitable concentration within the polymer matrix for desired applications. For example, in one embodiment, the colorant(s) is/are at a concentration, by volume, of 5% or less, such as, between 0.5 % and 2.5%, between 4% and 6%, between 0.5% and 1.5%, between 1% and 3%, between 4.5% and 5%, or any suitable combination, sub-combination, range, or sub-range therein.

The conductive particles are at any suitable concentration within the polymer matrix for desired applications. In one embodiment, the conductive particles are at a concentration, by volume, between 20% and 40% total loading, between 20% and 35% total loading, between 25% and 40% total loading, between 25% and 35% total loading, between 28% and 32% total loading, between 29% and 31% total loading, or any suitable combination, sub-combination, range, or sub-range therein. In a further embodiment, a first species of the conductive particles (for example, copper or copper-containing particles) is present at a relative concentration of between 40% and 75%, such as, between 40% and 55%, between 55% and 65%, between 70% and 75%, or any suitable combination, sub-combination, range, or sub-range therein. A second species of the conductive particles (for example, tin or tin-containing particles) are at a concentration, by volume, of between 25% and 60%, such as, between 25% and 30%, between 35% and 45%, between 55% and 60%, or any suitable combination, sub-combination, range, or sub-range therein.

The conductive composite formulation includes any other suitable constituents. For example, in one embodiment, the conductive composite formulation includes a sebacate-type of plasticizer, for example, at a volume concentration of between 5% and 10% (for example, 7.5%). In one embodiment, the conductive composite formulation includes a process aid for facilitating filler dispersion and increasing processability in a homogenous or substantially homogenous manner. In one embodiment, the conductive composite formulation includes a viscosity-depressing constituent or a viscosity-increasing constituent. The conductive composite formulation includes or is devoid of a crosslinking agent or crosslinking agents.

To achieve the specific coloration desired for the specific applications, according to one embodiment, initially, the conductive particles are blended together (for example, at a volumetric ratio of between 50% and 70% copper-containing dendrites and/or between 30% and 50% tin-containing particles), resulting in a neutral gray color. Black and/or white pigments is/are then added to the polymer matrix, resulting in a black color, a light gray color, or an off-white color. The colorant(s) (for example, that is/are not black or white) is/are then added, especially to the light gray color or the off-white color, thereby producing the desired color for the product.

## Claims

1. A conductive composite formulation, comprising:
a polymer matrix;
conductive particles being blended within the polymer matrix; and
a colorant blended with the polymer matrix;
wherein the conductive composite formulation has a compound resistivity of between 0.0005 ohm·cm and 0.2 ohm·cm;
**characterised by**:
the conductive particles having copper-containing material and tin-containing material.

2. The conductive composite formulation of claim 1, wherein the colorant absorbs light outside of a wavelength selected from the group consisting of between 620 nm and 740 nm, between 560 nm and 590 nm, between 490 nm and 560 nm, and between 450 nm and 490 nm.

3. The conductive composite formulation of claim 1, comprising white pigment, preferably wherein the white pigment includes zinc oxide, titanium dioxide, or bismuth nitrate oxide.

4. The conductive composite formulation of claim 3, wherein the white pigment is at a concentration, by volume, of 5% or less.

5. The conductive composite formulation of claim 1, comprising black pigment, preferably wherein the black pigment includes carbon black or aniline black.

6. The conductive composite formulation of claim 5, wherein the black pigment is at a concentration, by volume, of one of (a) between 0.5% and 2.5%, and (b) between 4% and 6%.

7. The conductive composite formulation of claim 1, comprising at least one of (a) the concentration, by volume, of the copper-containing material within the conductive particles is between 40% and 75%, and (b) the concentration, by volume, of the tin-containing material within the conductive particles is between 25% and 60%.

8. A conductive composite formulation of claim 1, wherein the colorant absorbs light outside of a wavelength selected from the group consisting of between 400 nm and 450 nm, between 450 nm and 490 nm, between 490 nm and 560 nm, between 560 nm and 590 nm, between 590 nm and 635 nm, and between 620 nm and 740 nm;
the colorant is a white pigment blended with the polymer matrix at a concentration, by volume, of between 0.5% and 5%; and
copper-containing material and tin-containing material blended with the polymer matrix at a concentration, by volume, of between 20% and 40%.

9. An article at least partially formed from a conductive composite formulation of claim 1.

## Patentansprüche

1. Leitfähige Verbundstoffformulierung, die Folgendes umfasst:
eine Polymermatrix;
leitfähige Partikel, die in die Polymermatrix eingemischt sind; und
einen Farbstoff, der mit der Polymermatrix vermischt ist;
wobei die leitfähige Verbundstoffformulierung einen spezifischen Mischungswiderstand zwischen 0,0005 Ohm.cm und 0,2 Ohm.cm aufweist;
**dadurch gekennzeichnet, dass**:
die leitfähigen Partikel kupferhaltiges Material und zinnhaltiges Material aufweisen.

2. Leitfähige Verbundstoffformulierung nach Anspruch 1, wobei der Farbstoff Licht außerhalb einer Wellenlänge absorbiert, die ausgewählt ist aus der Gruppe bestehend aus 620 nm bis 740 nm, 560 nm bis 590 nm, 490 nm bis 560 nm und 450 nm bis 490 nm.

3. Leitfähige Verbundstoffformulierung nach Anspruch 1, die weißes Pigment umfasst, wobei das weiße Pigment vorzugsweise Zinkoxid, Titandioxid oder Bismutnitratoxid enthält.

4. Leitfähige Verbundstoffformulierung nach Anspruch 3, wobei das weiße Pigment in einer Konzentration, nach Volumen, von 5 % oder weniger vorliegt.

5. Leitfähige Verbundstoffformulierung nach Anspruch 1, die schwarzes Pigment umfasst, wobei das schwarze Pigment vorzugsweise Ruß oder Anilinschwarz enthält.

6. Leitfähige Verbundstoffformulierung nach Anspruch 5, wobei das schwarze Pigment in einer Konzentration, nach Volumen, von (a) 0,5% bis 2,5% oder (b) 4% bis 6% vorliegt.

7. Leitfähige Verbundstoffformulierung nach Anspruch 1, die (a) die Konzentration, nach Volumen, des kupferhaltigen Materials innerhalb der leitfähigen Partikel von 40 % bis 75 % und/oder (b) die Konzentration, nach Volumen, des zinnhaltigen Materials innerhalb der leitfähigen Partikel von 25 % bis 60 % aufweist.

8. Leitfähige Verbundstoffformulierung nach Anspruch 1, wobei der Farbstoff Licht außerhalb einer Wellenlänge absorbiert, die ausgewählt ist aus der Gruppe bestehend aus 400 nm bis 450 nm, 450 nm bis 490 nm, 490 nm bis 560 nm, 560 nm bis 590 nm, 590 nm bis 635 nm und 620 nm bis 740 nm;
der Farbstoff ein weißes Pigment ist, das mit der Polymermatrix in einer Konzentration, nach Volumen, von 0,5 % bis 5 % vermischt ist; und
kupferhaltiges Material und zinnhaltiges Material, das mit der Polymermatrix in einer Konzentration, nach Volumen, von 20% bis 40% vermischt ist.

9. Gegenstand, der zumindest teilweise aus einer leitfähigen Verbundstoffformulierung nach Anspruch 1 gebildet ist.

## Revendications

1. Formulation composite conductrice, comprenant :
une matrice polymère ;
des particules conductrices qui sont mélangées au sein de la matrice polymère ; et
un colorant mélangé avec la matrice polymère ;
la formulation composite conductrice ayant une résistivité de composé située entre 0,0005 ohm.cm et 0,2 ohm.cm ;
**caractérisée par le fait que** :
les particules conductrices ont une matière contenant du cuivre et une matière contenant de l'étain.

2. Formulation composite conductrice de la revendication 1, dans laquelle le colorant absorbe de la lumière en dehors d'une longueur d'onde sélectionnée parmi le groupe consistant en entre 620 nm et 740 nm, entre 560 nm et 590 nm, entre 490 nm et 560 nm, et entre 450 nm et 490 nm.

3. Formulation composite conductrice de la revendication 1, comprenant du pigment blanc, de préférence dans laquelle le pigment blanc inclut l'oxyde de zinc, le dioxyde de titane, ou l'oxyde de nitrate de bismuth.

4. Formulation composite conductrice de la revendication 3, dans laquelle le pigment blanc se situe à une concentration, par volume, de 5 % ou moins.

5. Formulation composite conductrice de la revendication 1, comprenant du pigment noir, de préférence dans laquelle le pigment noir inclut le noir de carbone ou le noir d'aniline.

6. Formulation composite conductrice de la revendication 5, dans laquelle le pigment noir se situe à une concentration, par volume, de l'une parmi (a) entre 0,5 % et 2,5 %, et (b) entre 4 % et 6 %.

7. Formulation composite conductrice de la revendication 1, comprenant au moins une concentration parmi (a) la concentration, par volume, de la matière contenant du cuivre au sein des particules conductrices qui se situe entre 40 % et 75 %, et (b) la concentration, par volume, de la matière contenant de l'étain au sein des particules conductrices qui se situe entre 25 % et 60 %.

8. Formulation composite conductrice de la revendication 1, dans laquelle le colorant absorbe de la lumière en dehors d'une longueur d'onde sélectionnée parmi le groupe consistant en entre 400 nm et 450 nm, entre 450 nm et 490 nm, entre 490 nm et 560 nm, entre 560 nm et 590 nm, entre 590 nm et 635 nm, et entre 620 nm et 740 nm ;
le colorant est un pigment blanc mélangé avec la matrice polymère à une concentration, par volume, qui se situe entre 0,5 % et 5 % ; et
une matière contenant du cuivre et une matière contenant de l'étain mélangées avec la matrice polymère à une concentration, par volume, qui se situe entre 20 % et 40 %.

9. Article au moins partiellement formé à partir d'une formulation composite conductrice de la revendication 1.
